# FASCICULE DE BREVET EUROPEEN

(11) **EP 2 785 230 B1**
(45) Date de publication et mention de la délivrance du brevet: **03.02.2016**
(21) Numéro de dépôt: 12806579.4
(22) Date de dépôt: 27.11.2012
(51) Int. Cl.: A47J 43/06, B02C 18/30

(54) **ACCESSOIRE DE PREPARATION D'ALIMENTS PRESENTANT UNE CONFIGURATION DE RANGEMENT**
ZUBEHÖR FÜR LEBENSMITTELZUBEREITUNG MIT AUFBEWAHRUNGSDESIGN
FOOD PREPARATION ACCESSORY PRESENTING A STORAGE DESIGN

(30) Priorité: 28.11.2011 FR 1160879
(43) Date de publication de la demande: 08.10.2014
(73) Titulaire: SEB S.A., 69130 Ecully (FR)
(72) Inventeur: FERRER, Florent, F-65310 Laloubere (FR); LARGUEZE, Mathieu, F-65000 Tarbes (FR)
(74) Mandataire: Cémeli, Eric Philippe Laurent
(86) Numéro de dépôt international: PCT/FR2012/052729
(87) Numéro de publication internationale: WO 2013/079864

(56) Documents cités:
- DE-C- 955 809
- FR-A1- 2 576 770

## Description

La présente invention concerne le domaine technique des appareils électroménagers de préparation d'aliments.

La présente invention se rapporte plus particulièrement aux appareils électroménagers de préparation d'aliments comportant un boîtier motorisé assemblé avec un accessoire d'appareil électroménager de préparation d'aliments comportant un outil de travail rotatif, ainsi qu'aux accessoires du type précité.

Il est connu du document FR 2 576 770 un accessoire d'appareil électroménager de préparation d'aliments comportant un outil de travail rotatif prévu pour être entraîné par un boîtier motorisé. L'outil de travail rotatif est logé dans un corps d'accessoire comprenant une goulotte. Le corps d'accessoire est associé à un élément de support. Ces dispositions permettent de simplifier le montage du corps d'accessoire sur le boîtier motorisé, du fait que les efforts exercés sur le corps d'accessoire, notamment lors de l'introduction d'aliments dans la goulotte, sont transmis au moins partiellement à l'élément de support. Un inconvénient de cette réalisation réside toutefois dans l'encombrement de l'accessoire, notamment en dehors des périodes d'utilisation.

Un objet de la présente invention est de proposer un accessoire d'appareil électroménager de préparation culinaire comportant un élément de support, qui présente un encombrement limité en configuration de rangement.

Un autre objet de la présente invention est de proposer un appareil électroménager de préparation d'aliments comportant un boîtier motorisé assemblé avec un accessoire comportant un élément de support, qui présente un encombrement limité en configuration de rangement.

Ces objets sont atteints avec un accessoire d'appareil électroménager de préparation d'aliments, comprenant un élément de support portant un corps d'accessoire formant un logement prévu pour recevoir un outil de travail rotatif, le corps d'accessoire comportant une goulotte communiquant avec ledit logement, la goulotte présentant une ouverture d'introduction des aliments recevant un poussoir, du fait que l'élément de support peut être monté sur le corps d'accessoire dans une position de rangement dans laquelle le poussoir logé dans la goulotte est retenu par l'élément de support. Ces dispositions permettent d'obtenir un accessoire de préparation culinaire présentant une configuration de rangement particulièrement compacte. Ces dispositions permettent de plus d'éviter la chute du poussoir lors de la manipulation de l'accessoire.

Avantageusement alors, l'élément de support monté sur le corps d'accessoire dans une position de fonctionnement est agencé en dessous de la goulotte. Cette disposition permet de transmettre les efforts exercés au niveau de la goulotte à l'élément de support en minimisant les efforts exercés sur les autres points d'appui de l'accessoire.

Avantageusement encore, l'élément de support présente une échancrure prévue pour recevoir la goulotte lorsque l'élément de support occupe la position de rangement. Inversement, en position de fonctionnement, la pièce présentant l'échancrure permet de rigidifier l'élément de support.

Avantageusement encore, l'élément de support présente deux bras s'étendant de part et d'autre de la goulotte lorsque l'élément de support occupe la position de rangement. Cette disposition permet de rigidifier l'élément de support en position de fonctionnement.

Avantageusement alors, les deux bras sont réunis par une traverse s'étendant au-dessus de la goulotte lorsque l'élément de support occupe la position de rangement. Cette disposition permet de rigidifier encore d'avantage l'élément de support en position de fonctionnement, tout en offrant une surface d'appui permettant de stabiliser l'accessoire.

Avantageusement encore, le corps d'accessoire forme une glissière sur laquelle est engagé l'élément de support. Cette disposition permet de faciliter la manipulation de l'élément de support, tout en assurant une liaison fiable entre le corps d'accessoire et l'élément de support.

Selon une forme de réalisation avantageuse, la glissière comporte deux nervures longitudinales agencées de manière opposée sur le corps d'accessoire.

Avantageusement encore, l'accessoire comprend un organe d'entraînement prévu pour entraîner un outil de travail rotatif agencé dans le logement du corps d'accessoire. Ainsi l'outil de travail rotatif n'est pas directement en contact avec le boîtier motorisé assemblé avec l'accessoire.

Avantageusement alors, l'organe d'entraînement appartient à un élément de transmission assemblé avec le corps d'accessoire. Cette disposition permet de simplifier le nettoyage des parties de l'accessoire en contact avec les aliments.

Avantageusement alors, l'élément de transmission forme une autre glissière sur laquelle est engagé l'élément de support. Cette disposition permet de mieux répartir les efforts exercés sur l'accessoire.

Selon une forme de réalisation avantageuse, l'autre glissière comporte deux nervures longitudinales agencées de manière opposée sur le corps d'accessoire.

Selon un mode de réalisation, l'accessoire comporte un outil de travail rotatif formant un tambour prévu pour râper et/ou émincer les aliments introduits dans la goulotte. En alternative, l'outil de travail rotatif pourrait notamment comprendre une vis, pour réaliser un pressoir ou un hachoir à viande.

Ces objets sont atteints également avec un appareil électroménager de préparation d'aliments comprenant un boîtier motorisé assemblé avec un accessoire comportant un outil de travail rotatif, dans lequel l'accessoire est conforme à l'une au moins des caractéristiques précitées.

Avantageusement alors, le boîtier motorisé présente une sortie d'entraînement prévue pour entraîner en rotation un organe entraîneur de l'accessoire.

Avantageusement alors, l'organe entraîneur est une tige présentant au moins une protubérance latérale. Une telle construction de boîtier motorisé est rencontrée notamment dans les appareils tenus à la main de type batteur.

Avantageusement encore, l'accessoire comporte un crochet prévu pour venir en prise avec le boîtier motorisé.

Avantageusement alors, l'organe entraîneur et une protubérance de positionnement de l'accessoire sont agencés de part et d'autre du crochet.

L'invention sera mieux comprise à l'étude d'un exemple de réalisation, pris à titre nullement limitatif, illustré dans les figures annexées, dans lesquelles :
- la figure 1 est une vue en perspective d'un exemple de réalisation d'un appareil de préparation d'aliments comportant un accessoire selon l'invention,
- la figure 2 est une vue en perpective du boîtier motorisé de l'appareil illustré sur la figure 1,
- la figure 3 est une vue partielle en perspective de l'accessoire visible sur la figure 1, montrant un élément de support amovible monté sur un corps d'accessoire dans une position de fonctionnement,
- la figure 4 est une vue en perspective et en éclaté de l'accessoire illustré sur les figures 1 et 3,
- la figure 5 est une vue partielle en perspective de l'accessoire visible sur les figures 1, 3 et 4, montrant l'élément de support amovible retiré du corps d'accessoire,
- la figure 6 est une vue en perspective de l'accessoire visible sur les figures 1, 3, 4 et 5, montrant l'élément de support amovible monté sur le corps d'accessoire dans une position de rangement.

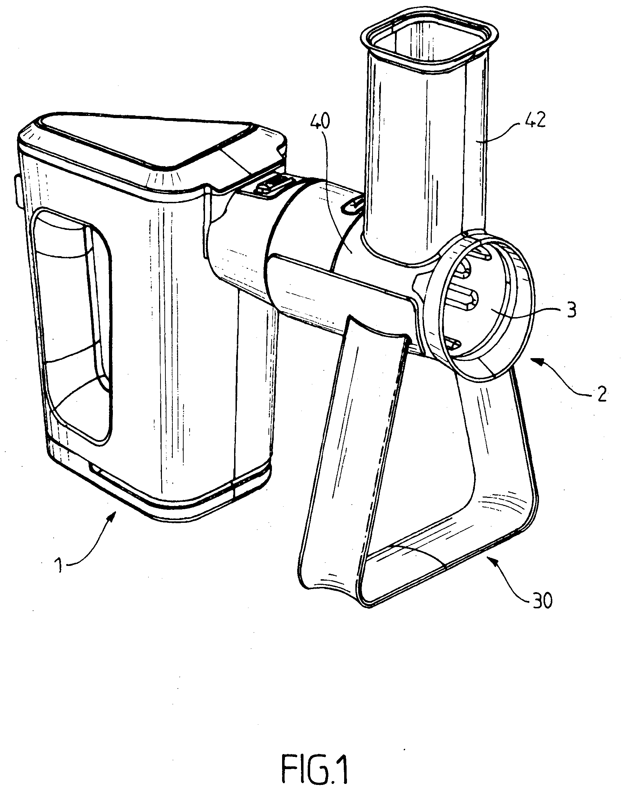

L'appareil électroménager de préparation d'aliments illustré sur la figure 1 comprend un boîtier motorisé 1 assemblé avec un accessoire 2 comportant un outil de travail rotatif 3.

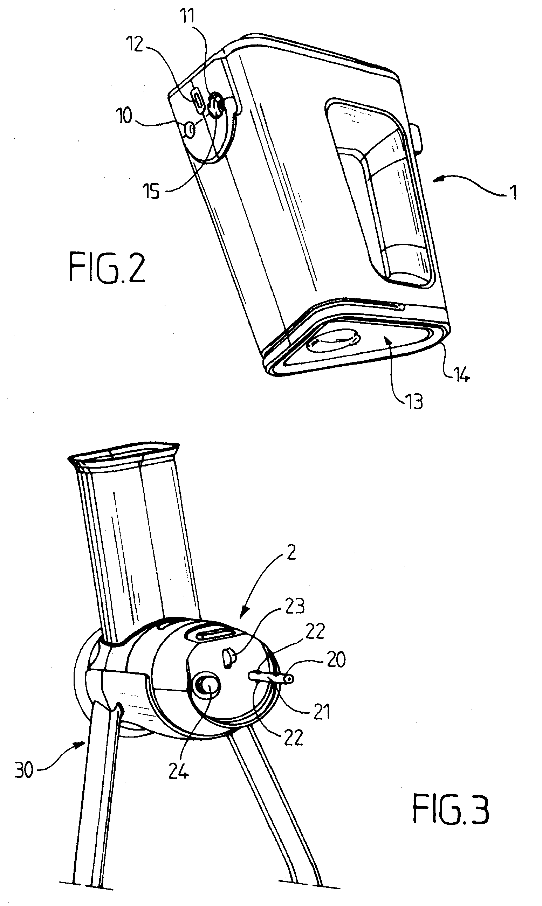

Tel que mieux visible sur les figures 2 et 3, le boîtier motorisé 1 présente une sortie d'entraînement 10 prévue pour entraîner en rotation un organe entraîneur 20 de l'accessoire 2 d'appareil électroménager de préparation d'aliments. Dans la forme de réalisation illustrée sur les figures, l'organe entraîneur 20 est une tige 21 présentant au moins une protubérance latérale 22. Une telle construction correspond aux dispositifs d'entraînement utilisés dans les appareils de type batteur. La sortie d'entraînement 10 peut être utilisée pour monter un outil de travail rotatif de type fouet ou crochet de pétrissage, le boîtier motorisé 1 pouvant être tenu à la main et/ou être disposé sur un support. Le boîtier motorisé 1 présente une autre sortie d'entraînement 11 prévue pour le montage d'un autre outil de travail rotatif de type fouet ou crochet de pétrissage. L'autre sortie d'entraînement 11 est agencée dans une cavité 15 du boîtier motorisé 1. Le boîtier motorisé 1 comporte un moteur électrique (non représenté sur les figures) entraînant en rotation la sortie d'entraînement 10 et l'autre sortie d'entraînement 11. Le boîtier motorisé 1 présente un organe de retenue 12 agencé entre la sortie d'entraînement 10 et l'autre sortie d'entraînement 11, prévu pour le montage de l'accessoire 2.

Tel que mieux visible sur la figure 2, le boîtier motorisé 1 présente une face d'appui 13 prévue pour reposer sur une table ou un plan de travail. La face d'appui 13 présente avantageusement une zone d'appui 14 réalisée en matériau élastomère. Tel que représenté sur la figure 2, la zone d'appui 14 est annulaire.

Tel que représenté sur la figure 3, l'accessoire 2 comporte un crochet 23 prévu pour venir en prise avec le boîtier motorisé 1. Plus particulièrement, le crochet 23 vient en prise avec l'organe de retenue 12 lorsque l'accessoire 2 est assemblé avec le boîtier motorisé 1. L'accessoire 2 comporte aussi une protubérance de positionnement 24 prévue pour être engagée dans la cavité 15 du boîtier motorisé 1. L'organe entraîneur 20 et la protubérance de positionnement 24 sont agencés de part et d'autre du crochet 23.

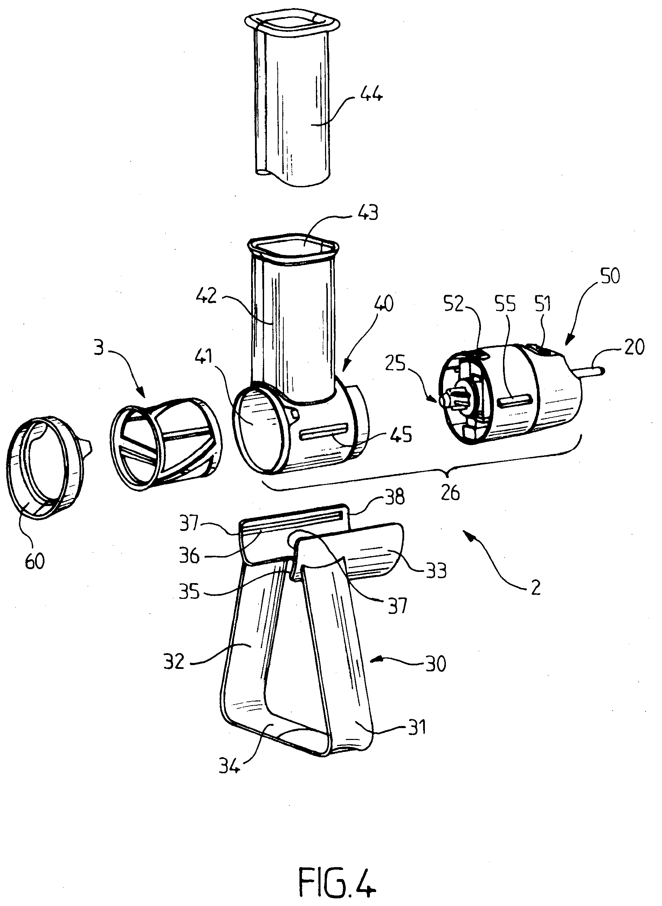

Tel que mieux visible sur la figure 4, l'accessoire 2 comprend un élément de support 30 portant un corps d'accessoire 40 formant un logement 41 prévu pour recevoir l'outil de travail rotatif 3. Le corps d'accessoire 40 comprend une goulotte 42 communiquant avec ledit logement 41. La goulotte 42 présente une ouverture d'introduction des aliments 43 recevant un poussoir 44.

Une bague 60 de retenue de l'outil de travail rotatif 3 peut être montée sur le corps d'accessoire 40.

L'élément de support 30 présente deux bras 31, 32 issus d'une paroi 33 prévue pour être montée autour du corps d'accessoire 40. Les deux bras 31, 32 sont réunis par une traverse 34. La traverse 34 présente une longueur supérieure à la largeur de la paroi 33, de sorte que les deux bras 31, 32 présentent une configuration trapézoïdale permettant de stabiliser transversalement l'élément de support 30. Les bras 31, 32 et la traverse 34 présentent avantageusement une section incurvée pour augmenter leur rigidité.

L'élément de support 30 présente une échancrure 35 formée sur la paroi 33. L'échancrure 35 est agencée entre les deux bras 31, 32, tel que visible sur la figure 4.

L'accessoire 2 comprend un organe d'entraînement 25 prévu pour entraîner l'outil de travail rotatif 3 agencé dans le logement 41 du corps d'accessoire 40. Plus particulièrement selon l'exemple de réalisation illustré sur les figures, l'organe d'entraînement 25 appartient à un élément de transmission 50 assemblé avec le corps d'accessoire 40. L'organe entraîneur 20, le crochet 23 et la protubérance de positionnement 24 appartiennent également à l'élément de transmission 50. Le corps d'accessoire 40 et l'élément de transmission 50 appartiennent à un boîtier d'accessoire 26.

Le crochet 23 est monté mobile et est manoeuvré par un bouton de verrouillage 51. Un organe de verrouillage 52 est prévu pour assembler l'élément de transmission 50 avec le corps d'accessoire 40. L'élément de transmission 50 comprend avantageusement un réducteur (non représenté sur les figures) relié à l'organe d'entraînement 25 et à l'organe entraîneur 20 pour obtenir une vitesse de rotation adaptée pour l'outil de travail rotatif 3.

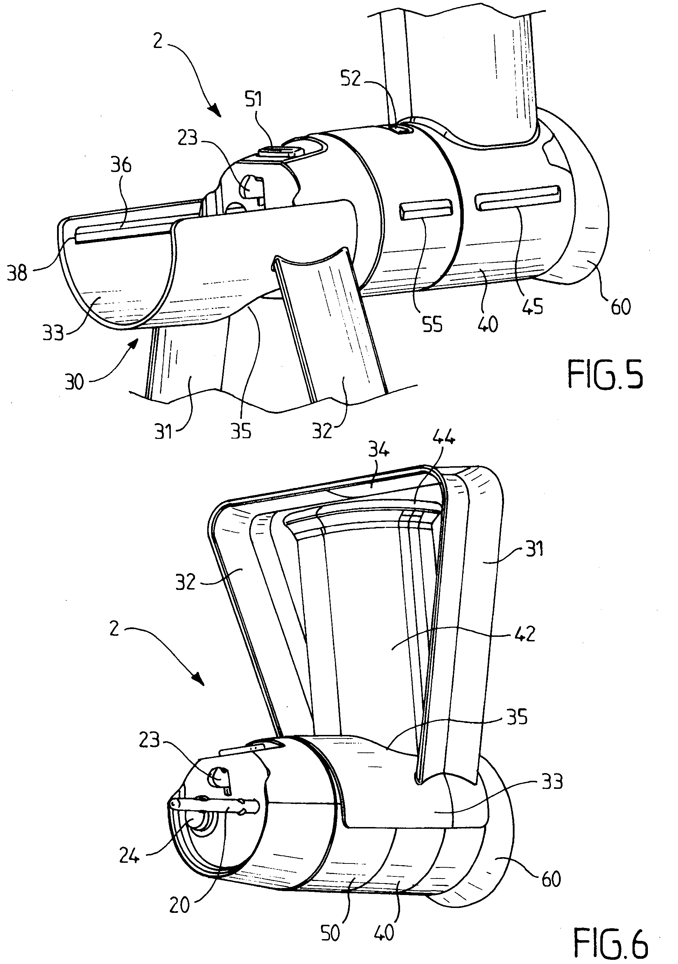

Le corps d'accessoire 40 forme une glissière sur laquelle est engagé l'élément de support 30, tel que représenté sur les figures 1, 3 et 6. Dans l'exemple de réalisation illustré sur les figures, la glissière comporte deux nervures longitudinales 45 agencées de manière opposée sur le corps d'accessoire 40, tel que visible sur les figures 4 et 5.

De manière préférée, l'élément de transmission 50 forme une autre glissière sur laquelle est engagé l'élément de support 30, tel que représenté sur les figures 1, 3 et 6. Dans l'exemple de réalisation illustré sur les figures, l'autre glissière comporte deux autres nervures longitudinales 55 agencées de manière opposée sur l'élément de transmission 50, tel que visible sur les figures 4 et 5.

Tel que visible sur les figures 4 et 5, l'élément de support 30 comporte deux rainures internes 36 opposées ménagées dans la paroi 33. Chaque rainure interne 36 présente une entrée latérale 37 à une extrémité et une butée 38 à l'autre extrémité.

L'élément de support 30 est monté amovible sur le corps d'accessoire 40 et peut occuper une position de fonctionnement dans laquelle l'ouverture d'introduction des aliments 43 est dégagée, tel que représenté sur les figures 1 et 3. L'élément de support 30 monté sur le corps d'accessoire 40 dans la position de fonctionnement est agencé en dessous de la goulotte 42, pour une transmission directe des efforts.

L'élément de support 30 peut aussi être monté sur le corps d'accessoire 40 dans une position de rangement, dans laquelle le poussoir 44 logé dans la goulotte 42 est retenu par l'élément de support 30, tel que représenté sur la figure 6.

L'échancrure 35 est prévue pour recevoir la goulotte 42 lorsque l'élément de support 30 occupe la position de rangement. Les deux bras 31, 32 s'étendent de part et d'autre de la goulotte 42 lorsque l'élément de support 30 occupe la position de rangement. La traverse 34 s'étend au-dessus de la goulotte 42 lorsque l'élément de support 30 occupe la position de rangement et retient le poussoir 44 logé dans la goulotte 42. La traverse 34 n'appuie pas nécessairement sur le poussoir 44 mais empêche la sortie du poussoir 44 de la goulotte 42.

Le fonctionnement de la présente invention est le suivant.

Pour utiliser le boîtier motorisé 1 avec l'accessoire 2, l'utilisateur assemble d'abord le corps d'accessoire 40 avec l'élément de transmission 50, puis met en place l'élément de support 30 sur l'élément de transmission 50 et le corps d'accessoire 40 en engageant les autres nervures longitudinales 55 puis les nervures longitudinales 45 dans les rainures 36, de manière à positionner la traverse 34 à l'opposé de la goulotte 42. L'utilisateur peut ensuite assembler l'accessoire 2 ainsi monté avec le boîtier motorisé 1.

Pour ranger l'accessoire 2 après utilisation, l'utilisateur assemble de préférence le corps d'accessoire 40 avec l'élément de transmission 50, range le poussoir 44 dans la goulotte 42 puis met en place l'élément de support 30 sur l'élément de transmission 50 et le corps d'accessoire 40 en engageant les autres nervures longitudinales 55 puis les nervures longitudinales 45 dans les rainures 36, de manière à positionner la traverse 34 au dessus de la goulotte 42. L'accessoire 2 en configuration de rangement peut ainsi être disposé dans la position la plus appropriée sans risque de chute du poussoir 44.

A titre de variante, l'outil de travail rotatif n'est pas nécessairement un tambour cylindrique. L'outil de travail rotatif peut notamment former un tambour tronconique.

A titre de variante, l'outil de travail rotatif ne forme pas nécessairement un tambour prévu pour râper et/ou émincer les aliments introduits dans la goulotte, mais peut par exemple comporter une vis, notamment pour former un extracteur de jus ou un hachoir à viande.

La présente invention n'est nullement limitée à l'exemple de réalisation décrit et à ses variantes, mais englobe de nombreuses modifications dans le cadre des revendications.

## Revendications

1. Accessoire (2) d'appareil électroménager de préparation d'aliments, comprenant un élément de support (30) portant un corps d'accessoire (40) formant un logement (41) prévu pour recevoir un outil de travail rotatif (3), le corps d'accessoire (40) comportant une goulotte (42) communiquant avec ledit logement (41), la goulotte (42) présentant une ouverture d'introduction des aliments (43) recevant un poussoir (44), **caractérisé en ce que** l'élément de support (30) peut être monté sur le corps d'accessoire (40) dans une position de rangement dans laquelle le poussoir (44) logé dans la goulotte (42) est retenu par l'élément de support (30).

2. Accessoire (2) d'appareil électroménager de préparation d'aliments selon la revendication 1, **caractérisé en ce que** l'élément de support (30) monté sur le corps d'accessoire (40) dans une position de fonctionnement est agencé en dessous de la goulotte (42).

3. Accessoire (2) d'appareil électroménager de préparation d'aliments selon l'une des revendications 1 ou 2, **caractérisé en ce que** l'élément de support (30) présente une échancrure (35) prévue pour recevoir la goulotte (42) lorsque l'élément de support (30) occupe la position de rangement.

4. Accessoire (2) d'appareil électroménager de préparation d'aliments selon l'une des revendications 1 à 3, **caractérisé en ce que** l'élément de support (30) présente deux bras (31, 32) s'étendant de part et d'autre de la goulotte (42) lorsque l'élément de support (30) occupe la position de rangement.

5. Accessoire (2) d'appareil électroménager de préparation d'aliments selon la revendication 4, **caractérisé en ce que** les deux bras (31, 32) sont réunis par une traverse (34) s'étendant au-dessus de la goulotte (42) lorsque l'élément de support (30) occupe la position de rangement.

6. Accessoire (2) d'appareil électroménager de préparation d'aliments selon l'une des revendications 1 à 5, **caractérisé en ce que** le corps d'accessoire (40) forme une glissière sur laquelle est engagé l'élément de support (30).

7. Accessoire (2) d'appareil électroménager de préparation d'aliments selon l'une des revendications 1 à 6, **caractérisé en ce qu'**il comprend un organe d'entraînement (25) prévu pour entraîner un outil de travail rotatif (3) agencé dans le logement (41) du corps d'accessoire (40).

8. Accessoire (2) d'appareil électroménager de préparation d'aliments selon la revendication 7, **caractérisé en ce que** l'organe d'entraînement (25) appartient à un élément de transmission (50) assemblé avec le corps d'accessoire (40).

9. Accessoire (2) d'appareil électroménager de préparation d'aliments selon la revendication 8, **caractérisé en ce que** l'élément de transmission (50) forme une autre glissière sur laquelle est engagé l'élément de support (30).

10. Accessoire (2) d'appareil électroménager de préparation d'aliments selon l'une des revendications 1 à 9, **caractérisé en ce qu'**il comporte un outil de travail rotatif (3) formant un tambour prévu pour râper et/ou émincer les aliments introduits dans la goulotte (42).

11. Appareil électroménager de préparation d'aliments comprenant un boîtier motorisé (1) assemblé avec un accessoire (2) comportant un outil de travail rotatif (3), **caractérisé en ce que** l'accessoire (2) est conforme à l'une des revendications 1 à 10.

12. Appareil électroménager de préparation d'aliments selon la revendication 11, **caractérisé en ce que** le boîtier motorisé (1) présente une sortie d'entraînement (10) prévue pour entraîner en rotation un organe entraîneur (20) de l'accessoire (2).

13. Appareil électroménager de préparation d'aliments selon la revendication 12, **caractérisé en ce que** l'organe entraîneur (20) est une tige (21) présentant au moins une protubérance latérale (22).

14. Appareil électroménager de préparation d'aliments selon l'une des revendications 11 à 13, **caractérisé en ce que** l'accessoire (2) comporte un crochet (23) prévu pour venir en prise avec le boîtier motorisé (1).

15. Appareil électroménager de préparation d'aliments selon la revendication 14, **caractérisé en ce que** l'organe entraîneur (20) et une protubérance de positionnement (24) de l'accessoire (2) sont agencés de part et d'autre du crochet (23).

## Patentansprüche

1. Zubehör (2) für ein Elektrohaushaltsgerät zur Zubereitung von Nahrungsmitteln, bestehend aus einem Trägerelement (30) mit einem Zubehörkörper (40), der eine Aufnahme (41) für ein rotierendes Arbeitsgerät (3) bildet, wobei der Zubehörkörper (40) einen mit der genannten Aufnahme (41) verbundenen Einführschacht (42) mit einer Öffnung zur Einführung von Nahrungsmitteln (43) und mit einem Stößel (44) aufweist, **dadurch gekennzeichnet, dass** das Trägerelement (30) auf dem Zubehörkörper (40) in einer Parkposition montiert sein kann, in welcher der im Einführschacht (42) sitzende Stößel (44) durch das Trägerelement (30) zurückgehalten wird.

2. Zubehör (2) für ein Elektrohaushaltsgerät zur Zubereitung von Nahrungsmitteln nach Anspruch 1, **dadurch gekennzeichnet, dass** das auf den Zubehörkörper (40) montierte Trägerelement (30) in einer Betriebsstellung unter dem Einführschacht (42) angeordnet ist.

3. Zubehör (2) für ein Elektrohaushaltsgerät zur Zubereitung von Nahrungsmitteln nach einem der Ansprüche 1 oder 2, **dadurch gekennzeichnet, dass** das Trägerelement (30) eine Aussparung (35) aufweist, die für die Aufnahme des Einführschachts (42) bestimmt ist, wenn sich das Trägerelement (30) in der Parkposition befindet.

4. Zubehör (2) für ein Elektrohaushaltsgerät zur Zubereitung von Nahrungsmitteln nach einem der Ansprüche 1 bis 3, **dadurch gekennzeichnet, dass** das Trägerelement (30) zwei Arme (31, 32) aufweist, die rechts und links neben dem Einführschacht (42) angeordnet sind, wenn sich das Trägerelement (30) in der Parkposition befindet.

5. Zubehör (2) für ein Elektrohaushaltsgerät zur Zubereitung von Nahrungsmitteln nach Anspruch 4, **dadurch gekennzeichnet, dass** die beiden Arme (31, 32) über eine Querstrebe (34) verbunden sind, die über dem Einführschacht (42) verläuft, wenn sich das Trägerelement (30) in der Parkposition befindet.

6. Zubehör (2) für ein Elektrohaushaltsgerät zur Zubereitung von Nahrungsmitteln nach einem der Ansprüche 1 bis 5, **dadurch gekennzeichnet, dass** der Zubehörkörper (40) eine Laufschiene bildet, auf der das Trägerelement (30) aufgesetzt ist.

7. Zubehör (2) für ein Elektrohaushaltsgerät zur Zubereitung von Nahrungsmitteln nach einem der Ansprüche 1 bis 6, **dadurch gekennzeichnet, dass** es ein Antriebsorgan (25) aufweist, das dafür bestimmt ist, ein rotierendes Arbeitsgerät (3) anzutreiben, das in der Aufnahme (41) des Zubehörkörpers (40) sitzt.

8. Zubehör (2) für ein Elektrohaushaltsgerät zur Zubereitung von Nahrungsmitteln nach Anspruch 7, **dadurch gekennzeichnet, dass** das Antriebsorgan (25) zu einer Getriebekomponente (50) gehört, die mit dem Zubehörkörper (40) verbunden ist.

9. Zubehör (2) für ein Elektrohaushaltsgerät zur Zubereitung von Nahrungsmitteln nach Anspruch 8, **dadurch gekennzeichnet, dass** die Getriebekomponente (50) eine weitere Laufschiene bildet, auf der das Trägerelement (30) aufgesetzt ist.

10. Zubehör (2) für ein Elektrohaushaltsgerät zur Zubereitung von Nahrungsmitteln nach einem der Ansprüche 1 bis 9, **dadurch gekennzeichnet, dass** es ein rotierendes Arbeitsgerät (3) aufweist, das eine Trommel bildet, die dazu bestimmt ist, über den Einführschacht (42) zugeführte Nahrungsmittel zu reiben und/oder in dünne Scheiben zu schneiden.

11. Elektrohaushaltsgerät zur Zubereitung von Nahrungsmitteln mit einem motorgetriebenen Gehäuse (1), das mit einem Zubehör (2) zusammengesetzt ist, welches ein rotierendes Arbeitsgerät (3) umfasst, **dadurch gekennzeichnet, dass** das Zubehör (2) einem der Ansprüche 1 bis 10 entspricht.

12. Elektrohaushaltsgerät zur Zubereitung von Nahrungsmitteln nach Anspruch 11, **dadurch gekennzeichnet, dass** das motorgetriebene Gehäuse (1) einen Antriebsausgang (10) aufweist, der dazu bestimmt ist, ein Antriebsorgan (20) des Zubehörs (2) in Rotation zu versetzen.

13. Elektrohaushaltsgerät zur Zubereitung von Nahrungsmitteln nach Anspruch 12, **dadurch gekennzeichnet, dass** es sich bei dem Antriebsorgan (20) um eine Stange (21) mit mindestens einem seitlichen Vorsprung (22) handelt.

14. Elektrohaushaltsgerät zur Zubereitung von Nahrungsmitteln nach einem der Ansprüche 11 bis 13, **dadurch gekennzeichnet, dass** das Zubehör (2) einen Haken (23) umfasst, der zum Eingriff mit dem motorisierten Gehäuse (1) bestimmt ist.

15. Elektrohaushaltsgerät zur Zubereitung von Nahrungsmitteln nach Anspruch 14, **dadurch gekennzeichnet, dass** das Antriebsorgan (20) und ein Vorsprung (24) zur Positionierung des Zubehörs (2) rechts und links vom Haken (23) angeordnet sind.

## Claims

1. Accessory (2) for a household electrical appliance for preparing food, comprising a supporting element (30) carrying an accessory body (40) forming a housing (41), designed to hold a rotating work tool (3), the accessory body (40) comprising a feed tube (42), connected to said housing (41); the feed tube (42) having an opening for introducing food (43) and suitable for receiving a plunger (44), **characterised in that** the supporting element (30) can be mounted onto the accessory body (40) in a storage position, in which the plunger (44) housed in the feed tube (42) is retained by the supporting element (30).

2. Accessory (2) for a household electrical appliance for preparing food, according to claim 1, **characterised in that** the supporting element (30) mounted onto the accessory body (40) in an operational position is located beneath the feed tube (42).

3. Accessory (2) for a household electrical appliance for preparing food, according to claim 1 or 2, **characterised in that** the supporting element (30) has an indentation (35) designed to receive the feed tube (42) when the supporting element (30) is in the storage position.

4. Accessory (2) for a household electrical appliance for preparing food, according to any one of claims 1 to 3, **characterised in that** the supporting element (30) has two arms (31, 32) extending on either side of the feed tube (42) when the supporting element (30) is in the storage position.

5. Accessory (2) for a household electrical appliance for preparing food, according to claim 4, **characterised in that** the two arms (31, 32) are connected by a crosspiece (34) extending above the feed tube (42) when the supporting element (30) is in the storage position.

6. Accessory (2) for a household electrical appliance for preparing food, according to any one of claims 1 to 5, **characterised in that** the accessory body (40) forms a runner on which the supporting element (30) is connected.

7. Accessory (2) for a household electrical appliance for preparing food, according to any one of claims 1 to 6, **characterised in that** it comprises a drive member (25) designed to drive a rotating work tool (3) located in the housing (41) of the accessory body (40).

8. Accessory (2) for a household electrical appliance for preparing food, according to claim 7, **characterised in that** the drive member (25) is part of a transmission element (50) assembled with the accessory body (40).

9. Accessory (2) for a household electrical appliance for preparing food, according to claim 8, **characterised in that** the transmission element (50) forms another runner onto which the supporting element (30) is connected.

10. Accessory (2) for a household electrical appliance for preparing food, according to any one of claims 1 to 9, **characterised in that** it comprises a rotating work tool (3) forming a drum designed to grate and/or chop the food introduced into the feed tube (42).

11. Household electrical appliance for preparing food, comprising a motorised casing (1) assembled with an accessory (2) comprising a rotating work tool (3), **characterised in that** the accessory (2) is compliant with any one of claims 1 to 10.

12. Household electrical appliance for preparing food, according to claim 11, **characterised in that** the motorised casing (1) has a drive output (10) designed to rotate a driving member (20) of the accessory (2).

13. Household electrical appliance for preparing food, according to claim 12, **characterised in that** the driving member (20) is a rod (21) with at least one lateral protrusion (22).

14. Household electrical appliance for preparing food, according to claims 11 to 13, **characterised in that** the accessory (2) comprises a hook (23) designed to engage with the motorised casing (1).

15. Household electrical appliance for preparing food, according to claim 14, **characterised in that** the driving member (20) and a positioning protrusion (24) of the accessory (2) are located on both sides of the hook (23).
